# EUROPEAN PATENT APPLICATION

(11) **EP 4 195 063 A1**
(43) Date of publication of application: **14.06.2023**
(21) Application number: 21852956.8
(22) Date of filing: 05.07.2021
(51) Int. Cl.: G06F 16/176

(54) **FILE SHARING METHOD AND APPARATUS, AND TERMINAL AND STORAGE MEDIUM**

(30) Priority: 06.08.2020 CN 202010785648
(71) Applicant: GUANGDONG OPPO MOBILE TELECOMMUNICATIONS CORP., LTD., Dongguan, Guangdong 523860 (CN)
(72) Inventor: LIU, Yue, Dongguan, Guangdong 523860 (CN)
(74) Representative: Taor, Simon Edward William
(86) International application number: PCT/CN2021/104532
(87) International publication number: WO 2022/028185

(57) **Abstract**

Embodiments of the present disclosure disclose a file sharing method and apparatus, a terminal, and a storage medium, which belong to the field of terminal technologies. The method includes: displaying a target component in an upper layer of a first application interface, wherein the target component is used to display a file identifier of a to-be-shared file, and addition and deletion of the to-be-shared file in the target component are supported; receiving a sharing operation on a target file identifier in the target component, wherein a target file corresponding to the target file identifier is available from at least one second application interface, and the sharing operation is used to trigger sharing of a selected file in a current application interface; and sharing the target file in the first application interface in response to the sharing operation. Compared with a manner in the related art of sharing files through a sharing pop-up window, the method provided in the embodiments of the present disclosure is conducive to improving efficiency in file sharing.

## Description

The present application claims priority to Chinese Patent Application No. 202010785648.X, entitled "FILE SHARING METHOD AND APPARATUS, TERMINAL, AND STORAGE MEDIUM" and filed on August 6, 2020, the entire disclosure of which is incorporated herein by reference.

### FIELD

Embodiments of the present disclosure relate to the field of terminal technologies, and more particularly, to a file sharing method, a file sharing apparatus, a terminal, and a storage medium.

### BACKGROUND

In daily use of terminals, users often need to share files through applications. For example, users use an instant messaging application to share photos they have taken to their friends in the instant messaging application, or share photos they have taken to a social media platform for their friends to view.

During file sharing, a user needs to select a to-be-shared file from an application where the file is stored, call out a sharing pop-up window (including sharing portals corresponding to different sharing manners) by using a long press or other operations, and select a sharing manner from the sharing pop-up window to complete the file sharing.

### SUMMARY

Embodiments of the present disclosure provide a file sharing method, a file sharing apparatus, a terminal, and a storage medium. Technical solutions are described below.

In one aspect, a file sharing method is provided according to an embodiment of the present disclosure. The method includes: displaying a target component in an upper layer of a first application interface, wherein the target component is used to display a file identifier of a to-be-shared file, and wherein addition and deletion of the to-be-shared file in the target component are supported; receiving a sharing operation on a target file identifier in the target component, wherein a target file corresponding to the target file identifier is available from at least one second application interface, and wherein the sharing operation is used to trigger sharing of a selected file in a current application interface; and sharing the target file in the first application interface in response to the sharing operation.

In another aspect, a file sharing apparatus is provided according to an embodiment of the present disclosure. The apparatus includes: a first display module configured to display a target component in an upper layer of a first application interface, wherein the target component is used to display a file identifier of a to-be-shared file, and wherein addition and deletion of the to-be-shared file in the target component are supported; a sharing operation receiving module configured to receive a sharing operation on a target file identifier in the target component, wherein a target file corresponding to the target file identifier is available from at least one second application interface, and wherein the sharing operation is used to trigger sharing of a selected file in a current application interface; and a sharing module configured to share the target file in the first application interface in response to the sharing operation.

In another aspect, a terminal is provided according to an embodiment of the present disclosure. The terminal includes a processor and a memory. The memory has at least one instruction stored thereon. The at least one instruction is configured to be executed by the processor to implement the file sharing method as described in the above aspect.

In another aspect, a computer-readable storage medium is provided according to an embodiment of the present disclosure. The storage medium has at least one instruction stored thereon. The at least one instruction is configured to be executed by a processor to implement the file sharing method as described in the above aspect.

In another aspect, a computer program product or a computer program is provided according to an embodiment of the present disclosure. The computer program product or the computer program includes computer instructions stored in a computer-readable storage medium. A processor of a computer device reads the computer instructions from the computer-readable storage medium. The processor executes the computer instructions to cause the computer device to perform the file sharing method provided in the above aspect.

### BRIEF DESCRIPTION OF THE DRAWINGS

FIG. 1 is a schematic diagram showing an implementation of a file sharing process in the related art.
FIG. 2 illustrates a method flowchart of a file sharing method according to an exemplary embodiment of the present disclosure.
FIG. 3 is a schematic diagram showing an implementation of a file sharing method according to an exemplary embodiment of the present disclosure.
FIG. 4 illustrates a method flowchart of a file sharing method according to another exemplary embodiment of the present disclosure.
FIG. 5 is a schematic diagram showing an implementation of a file sharing method illustrated according to another exemplary embodiment of the present disclosure.
FIG. 6 is a schematic diagram showing an implementation of a drag to share process according to an exemplary embodiment of the present disclosure.
FIG. 7 is a schematic diagram showing an implementation of a multi-file sharing process according to an exemplary embodiment of the present disclosure.
FIG. 8 is a schematic diagram showing an implementation of a floating window callout process according to an exemplary embodiment of the present disclosure.
FIG. 9 illustrates a method flowchart of a file sharing method according to yet another exemplary embodiment of the present disclosure.
FIG. 10 is a schematic diagram showing an implementation of a screenshot saving process according to an exemplary embodiment of the present disclosure.
FIG. 11 illustrates a block diagram showing a structure of a file sharing apparatus according to an embodiment of the present disclosure.
FIG. 12 illustrates a block diagram showing a structure of a terminal according to an exemplary embodiment of the present disclosure.

### DETAILED DESCRIPTION

In order to make the objects, technical solutions, and advantages of the present disclosure more apparent, the embodiments of the present disclosure will be described in detail below with reference to the accompanying drawings.

In the present disclosure, the term "plurality" means two or more. The term "and/or" represents a relationship between correlated objects, indicating the presence of three relationships. For example, "A and/or B" may mean three situations: A only, B only, or both A and B. The character "f" generally represents an "or" relationship between the correlated objects preceding and succeeding the character.

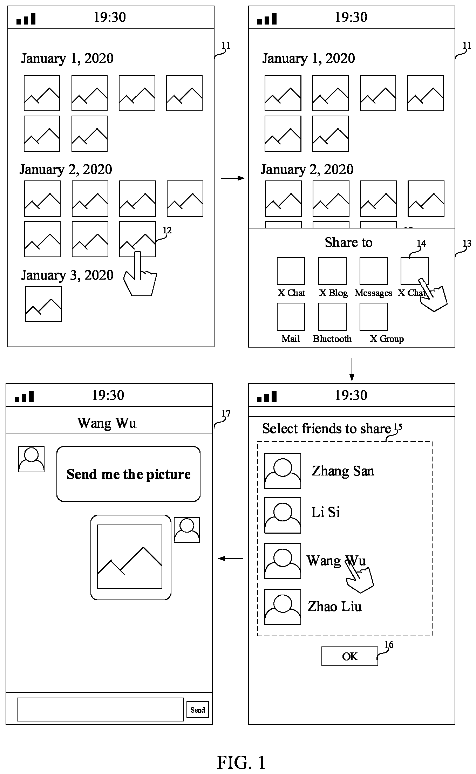

In a schematic example, a file sharing process in the related art is illustrated in FIG. 1. When needing to send a picture in an album to a friend in an instant messaging application, a user opens an album application and selects a picture 12 to be sent from an album interface 11. When receiving a long-press operation on the picture 12, a terminal displays a sharing pop-up window 13 that includes at least one sharing portal 14. Further, after the user clicks a sharing portal 14 in the sharing pop-up window 13 corresponding to the instant messaging application, the terminal displays a friend selection list 15, which contains a friend identifier of at least one friend in the instant messaging application. After the user selects a friend "Wang Wu" and clicks a sharing confirm button 16, the terminal shares the picture 12 to the user's friend "Wang Wu" via the instant messaging application and jumps to display a chat interface 17 corresponding to the user's friend "Wang Wu".

Obviously, when file sharing is performed in the above manner, processes of file selection, sharing portal selection, and sharing object selection are required. When a same file needs to be shared in different manners, the above processes need to be repeatedly performed, which leads to low sharing efficiency.

A concept "file sharing component" (i.e., target component) is introduced into the file sharing method according to embodiments of the present disclosure. A file identifier of a to-be-shared file may be displayed in the target component before carrying out file sharing. In a process of file sharing, the target component is displayed in an upper layer of an application interface having a file sharing demand. Accordingly, by performing a sharing operation (e.g., drag operation) on a file identifier in the target component, the user can quickly share, in a current application interface, a to-be-shared file corresponding to the selected file identifier. When there is a need for a plurality of times of sharing, the user only needs to open corresponding application interfaces and perform sharing operations on the file identifier in the target component to achieve a plurality of times of file sharing, which is more concise than sharing processes in the related art and is beneficial to improve efficiency of file sharing.

For example, when sharing a same picture to a friend in an instant messaging application, a social platform, and a personal blog, the user firstly places the picture in the target component. When sharing the picture to the friend subsequently, the user only needs to open a chat interface with the friend and drag a picture identifier in the target component (displayed in upper layer of the chat interface) to the chat interface to complete picture sharing. When sharing the picture through the social platform, the user only needs to open a sharing interface of the social platform and drag the picture identifier in the target component (displayed in upper layer of the sharing interface of the social platform) to the sharing interface of the social platform to complete picture sharing. When sharing the picture through the personal blog, the user only needs to open a blog publishing interface and drag the picture identifier in the target component (displayed in upper layer of the blog post interface) to the blog publishing interface to complete picture sharing.

The file sharing method according to embodiments of the present disclosure may be applied in a terminal having a touch display screen. The terminal may be a smartphone, a tablet computer, a digital player, a smart wearable device, or a personal computer, etc., which is not limited in the present disclosure.

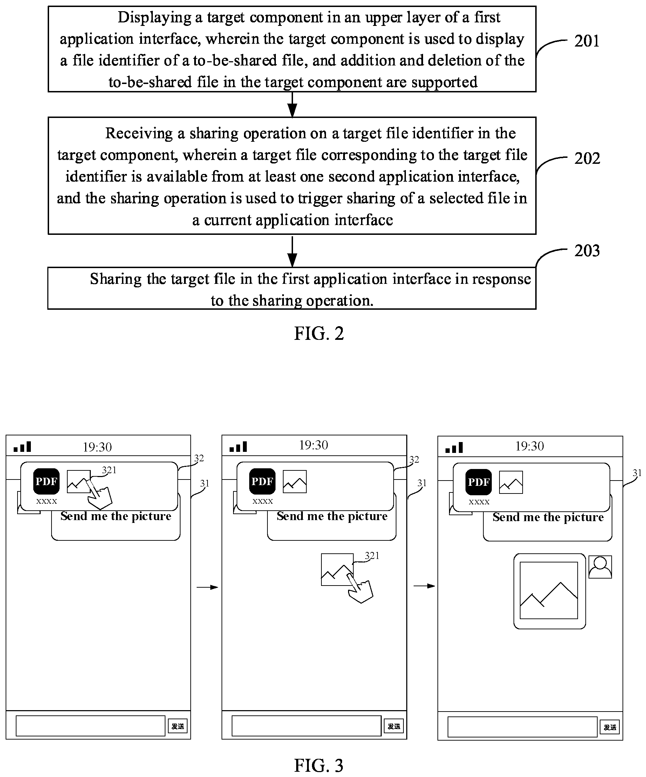

Reference is made to FIG. 2, which illustrates a method flowchart of a file sharing method according to an exemplary embodiment of the present disclosure. The method may include the following actions at blocks 201 to 203.

At block 201, a target component is displayed in an upper layer of a first application interface. The target component is configured to display a file identifier of a to-be-shared file. Addition and deletion of the to-be-shared file in the target component are supported.

In a possible implementation, the target component is displayed after the first application interface is displayed (i.e., display of the target component is triggered by an operation after the first application interface is displayed), or the target component is displayed before the first application interface is displayed (i.e., the first application interface is opened under the display of the target component).

Regarding forms to present the target component, in a possible implementation, the target component is presented in a form of a floating window, and accordingly, the file identifier of the to-be-shared file is displayed inside the floating window; or the target component is presented in a form of a mask region, and accordingly, the file identifier of the to-be-shared file is displayed inside the mask region. Of course, the target component may also be presented in other possible forms, which are not limited in the embodiments of the present disclosure. For the convenience of description, the following embodiments are illustrated schematically with the target component presented in the form of the floating window as an example.

In some embodiments, the target component is displayed in a fixed display region, or the display region of the target component is adjustable. For example, the target component is displayed at the top, the bottom, a left side, or a right side of an interface.

Optionally, the target component corresponds to a sharing file storage space used to store the to-be-shared file (store information relevant to the to-be-shared file, rather than file data of the to-be-shared file). Accordingly, the file identifier of the to-be-shared file in the sharing file storage space is displayed in the target component.

Optionally, the to-be-shared file includes at least one of a picture, a text file, a slide file, a table file, a compressed file, an audio file, a video file, an installation package file, a card, or an email. Accordingly, the file identifier includes at least one of a file icon, a name, or a thumbnail. Embodiments of the present disclosure do not limit a specific file type of the to-be-shared file or a specific form of the file identifier.

In the embodiments of the present disclosure, the addition and deletion of the to-be-shared file in the target component are supported. That is, a to-be-shared file may be added to the target component by an operation (the to-be-shared file is added to the sharing file storage space accordingly), or a to-be-shared file may be removed from the target component by an operation (the to-be-shared file is removed from the sharing file storage space accordingly). Optionally, the to-be-shared file displayed in the target component is set by the user as desired.

In some embodiments, the target component is a resident component. That is, the target component does not disappear with an interface switch. In addition, a display position of the target component may be changed by a move operation. For example, the target component is displayed at the top of an interface by default, and the user can move the target component to the bottom of the interface by a move operation.

In other embodiments, the display of the target component is canceled in response to an interface switch (e.g., an application switch).

Optionally, the target component may be displayed with a semi-transparency. For example, the transparency of the target component is set to 50%.

For example, as illustrated in FIG. 3, a file sharing floating window 32 is displayed in an upper layer of a chat interface 31. A PDF file and a file identifier 321 corresponding to a picture are displayed in the file sharing floating window 32.

It should be noted that when a file is deleted, a file identifier corresponding to the file will no longer be displayed in the target component.

At block 202, a sharing operation on a target file identifier in the target component is received. A target file corresponding to the target file identifier is available from at least one second application interface. The sharing operation is used to trigger sharing of a selected file in a current application interface.

In a possible implementation, at least one file identifier is displayed in the target component. The at least one file identifier includes the target file identifier of the target file in the at least one second application interface. The target file may belong to a same application interface or different application interfaces. For example, the target file includes a photo in an album application interface and a text file in a file management application interface.

When the target file in the second application interface needs to be shared through the first application interface, the user performs the sharing operation on the target file identifier, and accordingly, the terminal receives the sharing operation on the target file identifier.

Optionally, the first application interface and the second application interface are application interfaces of different applications. For example, the second application interface is an album interface in an album application, and the first application interface is a chat interface in an instant messaging application. Accordingly, the sharing operation is used to trigger file sharing across applications.

Optionally, the first application interface and the second application interface are different user interfaces of a same application. For example, the second application interface is a chat interface in an instant messaging application with a social user A and the first application interface is a chat interface in the instant messaging application with a social user B. Accordingly, the sharing operation is used to trigger file sharing across users. Alternatively, the second application interface is a chat interface of a group C in an instant messaging application and the first application interface is a chat interface of a group D in the instant messaging application. Accordingly, the sharing operation is used to trigger file sharing across groups.

In a possible implementation, the sharing operation may be a drag operation, a click operation, a double-click operation, a press operation, or a long-press operation, etc., on the target file identifier. This embodiment does not limit a specific operation form of the sharing operation.

For example, as illustrated in FIG. 3, when receiving a drag operation on a file identifier 321, corresponding to a picture, in the file sharing floating window 32, the terminal determines that a sharing operation on the picture is received.

At block 203, the target file is shared in the first application interface in response to the sharing operation.

Further, the terminal shares the target file in the first application interface based on the received sharing operation. After the target file is shared, the target component is kept displayed in the upper layer of the first application interface and the target file identifier is kept displayed in the target component, which facilitates subsequent sharing of the target file in other application interfaces.

In a possible implementation, an application to which the first application interface belongs automatically performs a file sharing operation in the background based on information relevant to the target file to achieve file sharing in the first application interface.

For example, as illustrated in FIG. 3, when a drag operation on the file identifier 321 corresponding to the picture is received, the instant messaging application shares the picture to a corresponding instant messaging user and displays a sharing effect in the chat interface 31.

In a possible application scenario, when the target file needs to be shared in a third application interface, the user may switch the first application interface to the third application interface through an interface switching operation, and trigger sharing of the target file in the third application interface by performing a sharing operation on the target file identifier in the target component in an upper layer of the third application interface.

In summary, in the embodiments of the present disclosure, through setting the target component and displaying the file identifier of the to-be-shared file in the target component, when the target file in the at least one second application interface needs to be shared in the first application interface, the target file can be shared by performing the sharing operation on the target file identifier in the target component in the upper layer of the first application interface. In addition, when a same file needs to be shared to different applications, a plurality of times of file sharing can be achieved by performing a plurality of times of sharing operations on the target file identifier in the target component, which is conducive to improving efficiency in sharing files compared with a manner in the related art of sharing files through the sharing pop-up window.

In a possible implementation, the method further includes, prior to the action of displaying the target component in the upper layer of the first application interface: displaying the target component in an upper layer of the second application interface; receiving an addition operation on the target file in the second application interface, the addition operation being used to trigger an addition of a file identifier to the target component; and displaying the target file identifier in the target component in response to the addition operation. The action of displaying the target component in the upper layer of the first application interface includes: switching the second application interface to the first application interface in response to an interface switching operation, and displaying the target component in the upper layer of the first application interface.

In a possible implementation, the action of displaying the target component in the upper layer of the second application interface includes: displaying the second application interface, and displaying the target component in the upper layer of the second application interface in response to a component callout operation; or displaying the second application interface, and displaying the target component in the upper layer of the second application interface in response to a selection operation on a shareable file in the second application interface.

In a possible implementation, the action of displaying the target component in the upper layer of the second application interface in response to a selection operation on a shareable file in the second application interface includes: displaying the target component temporarily in the upper layer of the second application interface in response to the selection operation on the shareable file in the second application interface; and displaying the target component fixedly in response to an addition operation on the shareable file. The target component fixedly displayed includes a file identifier of the shareable file.

In a possible implementation, the method further includes, subsequent to the action of receiving the addition operation on the target file in the second application interface: storing a target sharing path of the target file. The action of sharing the target file in the first application interface in response to the sharing operation includes: transmitting the target sharing path to an application to which the first application interface belongs in response to the sharing operation. The application to which the first application interface belongs is used for sharing the target file in the first application interface in accordance with the target sharing path.

In a possible implementation, the method further includes: stopping displaying the target component in response to not receiving any sharing operation or addition operation for a predetermined time length; or stopping displaying the target component in response to a component withdrawal operation on the target component,.

In a possible implementation, the action of receiving the sharing operation on the target file identifier in the target component includes: displaying a sharing effective identifier in a region in the upper layer of the first application interface other than the target component in response to a drag operation on the target file identifier in the target component; and determining, in response to a drag endpoint of the drag operation being in a display region corresponding to the sharing effective identifier, that the sharing operation performed on the target file identifier is received.

In a possible implementation, the method further includes, subsequent to the action of displaying the target component in the upper layer of the first application interface: performing a screenshot processing on the first application interface in response to a screenshot operation to obtain a target screenshot, wherein the target screenshot does not include the target component, and the target screenshot is displayed in the upper layer of the first application interface; receiving an addition operation on the target screenshot, wherein the addition operation is used to trigger an addition of a file identifier to the target component; and displaying a screenshot identifier corresponding to the target screenshot in the target component in response to the addition operation, and storing the target screenshot temporarily, wherein the temporarily stored target screenshot is not displayed in an album.

In a possible implementation, the method further includes, subsequent to the action of displaying the screenshot identifier corresponding to the target screenshot in the target component: removing the screenshot identifier from the target component and deleting the target screenshot in response to a delete operation on the screenshot identifier; and saving the target screenshot to the album in response to a save operation on the screenshot identifier.

In a possible implementation, the method further includes, subsequent to the action of sharing the target file in the first application interface in response to the sharing operation: updating a display order of the file identifier in the target component. The display order is determined based on a number of times for which the file has been shared or a most recent sharing time point of the file.

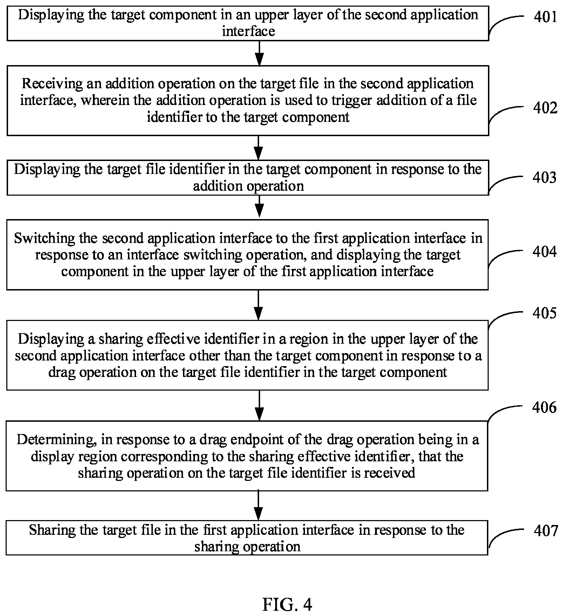

For a manner of setting the file identifier in the target component, in a possible implementation, the file identifier in the target component is added manually by the user. Reference is made to FIG. 4, which illustrates a method flowchart of a file sharing method according to another exemplary embodiment of the present disclosure. The method may include actions at blocks 401 to 407.

At block 401, the target component is displayed in an upper layer of the second application interface.

In a possible implementation, when the target component and the application interface are being displayed simultaneously, the user can add a file in the application interface to the target component. Therefore, in this embodiment, when a file in the second application interface needs to be shared to another application interface, the terminal displays the second application interface and displays, in its upper layer, the target component.

For a manner of triggering the display of the target component, in a possible implementation, the terminal displays the second application interface first, and generates and displays the target component in the second application interface in response to receiving a component callout operation. The target component resides in the second application interface.

Optionally, the component callout operation may be a pre-set gesture operation. For example, the component callout operation is a two-finger swipe operation pointing from a top edge of a screen to a bottom edge of the screen (which is distinguished from a single-finger swipe-down operation that calls out a drop-down bar). A swipe distance is greater than a distance threshold. The embodiments of the present disclosure do not limit an operation type of the component callout operation.

Optionally, when the target component may be called out by at least two types of component callout operations, initial display positions of the target component are different under different component callout operations. For example, when the component callout operation is a two-finger swipe operation pointing from the top edge of the screen to the bottom edge of the screen, the target component is displayed at the top of an interface; and when the component callout operation is a two-finger swipe operation pointing from a left edge of the screen to a right edge of the screen, the target component is displayed on a left side of the interface.

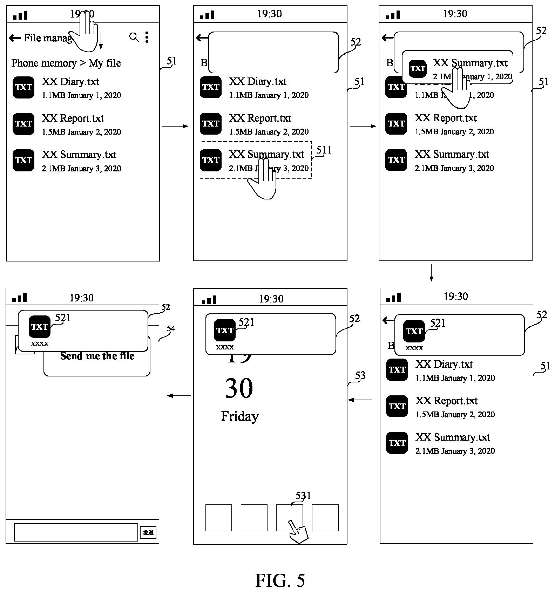

For example, as illustrated in FIG. 5, the terminal displays a file management interface 51. When a two-finger swipe-down operation starting from the top edge of the screen is received and a swipe distance reaches a distance threshold, the terminal determines that a floating window callout operation is received, and displays a file sharing floating window 52 in an upper layer of the file management interface 51.

At block 402, an addition operation on the target file in the second application interface is received. The addition operation is used to trigger an addition of a file identifier to the target component.

Optionally, the addition operation includes at least one of a drag operation, a double-click operation, a long-press operation, or a press operation. The embodiments of the present disclosure do not limit the operation type of the addition operation.

In a possible implementation, the addition operation is a two-finger drag operation, and a drag endpoint of the two-finger drag operation is located within the target component. Accordingly, the terminal obtains an endpoint of a line of two-finger contacts as a reference point in response to receiving the two-finger drag operation on the target file in the second application interface, and determine, in response to the reference point being located in a component region of the target component at the end of the two-finger drag operation, that the addition operation on the target file is received.

In other possible implementations, when the addition operation is a two-finger double-click operation, the addition of the file identifier to the target component is triggered by double-clicking the target file identifier with two fingers. When the addition operation is a long-press operation, the addition of the file identifier to the target component is triggered by long-pressing the target file identifier. The embodiments of the present disclosure are not limited in this regard.

At block 403, the target file identifier is displayed in the target component in response to the addition operation.

Further, the terminal displays the target file identifier in the target component in response to the addition operation.

For example, as illustrated in FIG. 5, when a two-finger drag operation on a target file 511 in the file management interface 51 is received and the drag endpoint of the two-finger drag operation is located in the file sharing floating window 52, the terminal displays the target file identifier 521 corresponding to the target file 511 in the file sharing floating window 52.

In a possible implementation, after receiving the addition operation on the target file, the terminal stores a target sharing path of the target file in the sharing file storage space for use in subsequent sharing of the target file.

At block 404, the second application interface is switched to the first application interface in response to an interface switching operation, and the target component is displayed in the upper layer of the first application interface.

In a possible implementation, the target component according to the embodiments of the present disclosure has a residency function. The target component remains displayed after the application interface is switched. Therefore, when the second application interface is switched to the first application interface, the target component is displayed in the upper layer of the first application interface.

For example, as illustrated in FIG. 5, when the file management interface 51 exits and an application icon 531 corresponding to the instant messaging application in a main system interface 53 is clicked, the terminal switches to display a chat interface 54 of the instant messaging application and displays the file sharing floating window 52 in the upper layer of the chat interface 54.

In another possible implementation, the terminal cancels the display of the target component in response to an application interface switch. After the application interface switch is completed subsequently, the display of the target component in the upper layer of the application interface after the switch needs to be triggered by the component callout operation again. This embodiment is not limited in this regard.

At block 405, a sharing effective identifier is displayed in a region in the upper layer of the second application interface other than the target component in response to a drag operation on the target file identifier in the target component.

In this embodiment, the sharing operation is a drag operation on the file identifier. To improve the accuracy of file sharing and reduce a probability of incorrect sharing due to misoperation, in a possible implementation, the terminal displays the sharing effective identifier in the upper layer of the first application interface in response to receiving the drag operation on the target file identifier, wherein the sharing effective identifier is located in a display region other than the target component.

Optionally, the sharing effective identifier may be in a form of an icon or a wireframe (indicating a range of a sharing effective region), etc., which is not limited in the embodiments of the present disclosure.

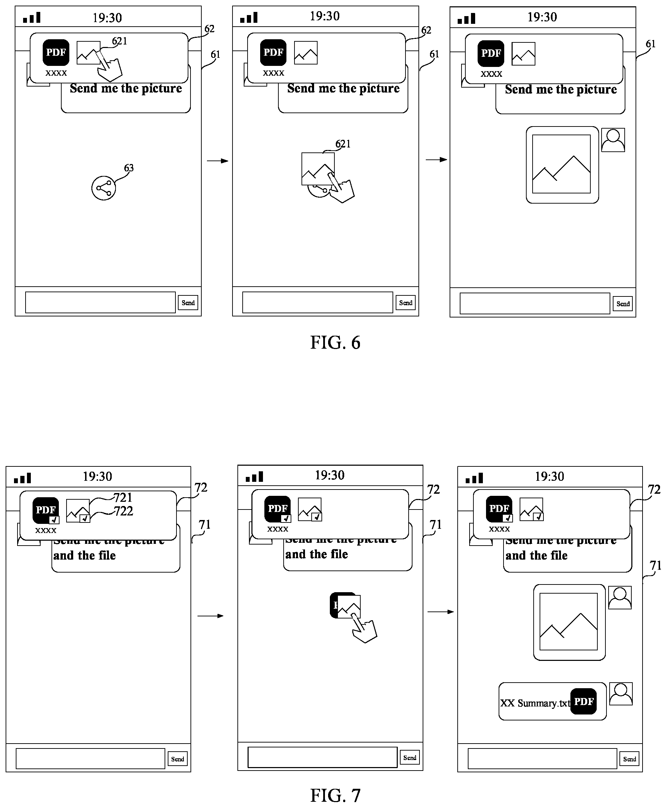

For example, as illustrated in FIG. 6, when a drag operation on a file identifier 621 in a file sharing floating window 62 corresponding to a picture is received, the terminal displays a sharing effective identifier 63 in an upper layer of a chat interface 61.

At block 406, it is determined, in response to a drag endpoint of the drag operation being in a display region corresponding to the sharing effective identifier, that the sharing operation on the target file identifier is received.

Further, the terminal detects whether the drag endpoint of the drag operation is in the display region corresponding to the sharing effective identifier; determines, in response to the drag endpoint of the drag operation being in the display region, that the sharing operation is received; and determines, in response to the drag endpoint of the drag operation being outside the display region, that the drag operation is not used to trigger file sharing.

For example, as illustrated in FIG. 6, when the file identifier 621 is lifted after being dragged to a display position at which the sharing effective identifier 63 is located, the terminal determines that the sharing operation for the picture is received, and thus shares the picture in the chat interface 61.

At block 407, the target file is shared in the first application interface in response to the sharing operation.

In a possible implementation, since the terminal stores the target sharing path of the target file, in order to realize file sharing in the first application interface, the terminal transmits the target sharing path to an application to which the first application interface belongs. The application to which the first application interface belongs shares the target file in the first application interface in accordance with the target sharing path.

The above implementations are illustrated by taking the sharing of a single target file as an example. In some application scenarios, the user may need to share a plurality of files (either from a same application interface or from different application interfaces) at the same time. In a possible implementation, each file identifier in the target component corresponds to a file selection control, and with the file selection controls, a plurality of target files in the target component can be selected simultaneously. When a sharing operation on any of the plurality of target files is received, the terminal shares the plurality of selected target files in the current application interface.

For example, as illustrated in FIG. 7, a file sharing floating window 72 contains file identifiers 721 corresponding to a PDF file and a picture. Each file identifier 721 contains a corresponding file selection control 722. When the user selects the PDF file and the picture through the file selection controls 722 and drags the PDF file and the picture to a chat interface 71, the terminal shares the PDF file and the picture in the chat interface 71.

In this embodiment, when the second application interface and the target component are being displayed simultaneously, the display of the target file in the target component can be triggered by performing the addition operation on the target file in the second interface. Therefore, the target file may be shared a plurality of times through the target component, which improves the efficiency of file sharing.

The above implementations are illustrated using an example of manually adding a file to the target component. In other possible implementations, when file sharing by means other than the target component (such as file sharing by means in the related art) is detected, the terminal automatically adds the shared file to the target component, which eliminates a process for the user to manually add the file to the target component before subsequent file sharing via the target component, and further improves the efficiency of file sharing.

In addition to the triggering of the display of the target component by the component callout operation in the above embodiments, in another possible implementation, when displaying the second application interface, the terminal displays the target component in the upper layer of the second application interface in response to receiving a selection operation on a shareable file in the second application interface without performing the component callout operation.

Optionally, the selection operation may include at least one of a double-click operation, a long-press operation, a drag operation, or a press operation. The embodiments of the present disclosure are not limited in this regard.

In some embodiments, in response to receiving a predetermined touch signal (such as a two-finger long-press signal) from the second application interface, the terminal detects whether a shareable file is displayed in a region corresponding to the predetermined touch signal. If yes, the terminal determines that a selection operation on the shareable file is received, and thus displays the target component.

However, an operation on the shareable file in the second application interface may not be used to trigger the display of the target component. Therefore, to reduce the probability of misoperation, in a possible implementation, the terminal displays the target component temporarily in the upper layer of the second application interface in response to receiving a selection operation on the shareable file in the second application interface. In this case, the target component disappears accordingly when the selection operation terminates. In response to receiving an addition operation on the shareable file, the terminal displays the target component fixedly. The addition operation is a subsequent coherent operation of the selection operation. When the selection operation and the addition operation terminate, the fixedly displayed target component still resides in the upper layer of the second application interface and does not disappear.

In addition, since the addition operation is performed on the shareable file, a file identifier of the shareable file is displayed in the target component. With the above approach, the previously independent component callout operation and file addition operation are integrated into one coherent operation, which further improves the efficiency of file sharing.

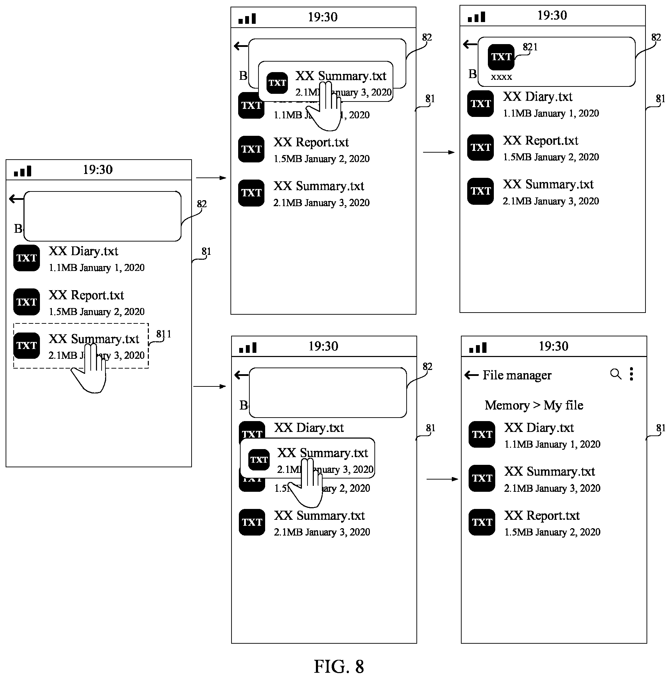

For example, as illustrated in FIG. 8, the terminal displays a file sharing floating window 82 in the upper layer of the file management interface 81 in response to receiving a two-finger long-press operation on a shareable file 811 in a file management interface 81. Further, in response to receiving a drag operation on the shareable file 811 and a drag endpoint of the drag operation being in the file sharing floating window 82, the terminal displays the file sharing floating window 82 fixedly and displays a file identifier 821 corresponding to the shareable file 811 in the file sharing floating window 82.

Further, in response to receiving a drag operation on the shareable file 811 and a drag endpoint of the drag operation being outside the file sharing floating window 82, the terminal determines that the drag operation is used to trigger an adjustment of a display order of the file in the file management interface 81, and cancels the displaying of the file sharing floating window 82 when the drag operation terminates.

After a completion of the file sharing, if the target component remains displayed in the upper layer of the application interface, the target component may affect the normal use of the application. Therefore, in a possible implementation, in response to not receiving any sharing operation or addition operation for a predetermined time length, i.e., the file in the target component having not been shared for the predetermined time length and the to-be-shared file having not been added to the target component for the predetermined time length, the terminal stops displaying the target component. For example, the displaying of the target component is stopped in response to not receiving any sharing operation or addition operation for 30s.

In another possible implementation, the terminal stops displaying the target component in response to a component withdrawal operation on the target component. Optionally, the component withdrawal operation and the component callout operation are mutually inverse operations. For example, when the component callout operation is a two-finger swipe-down operation, the terminal stops the displaying of the target component in response to receiving a two-finger swipe-up operation on the target component.

Of course, the component withdrawal operation may alternatively be a click operation or other gesture operation on a control, which is not limited in the embodiments.

It should be noted that after the displaying of the target component is stopped, when the user triggers the display of the target component again by an operation, the file identifier displayed in the target component remains the same as the file identifier displayed in the target component before the display was stopped.

To further improve the efficiency of selecting a file from the target component and sharing the file, in a possible implementation, the terminal updates a number of times for which a file corresponding to a respective file identifier in the target component has been shared and a most recent sharing time point of the file. Upon a completion of sharing the target file in the first application interface, the terminal updates a display order of the file identifier in the target component based on the number of times for which the file has been shared, or determines the display order based on a most recent sharing time point of the file. The display order is positively correlated with the number of times for which the file has been shared. That is, with an increase in the number of times the file has been shared, the file identifier is displayed more to the front. The display order is negatively correlated with the most recent sharing time point of the file. That is, the earlier the most recent sharing time point of the file, more to the back the file identifier is displayed.

In addition to updating the display order of the file identifier in the target component in the above manner, the terminal may adjust the display order of the file identifier in terms of file type, file size, or other dimensions, which is not limited in the embodiments.

In other possible implementations, in order to avoid a negative influence on the efficiency of the user selecting candidate files due to display of too many files that have already been shared in the target component, the terminal deletes, based on most recent sharing time points of files in the target component, a file the most recent sharing time point of which has a time interval greater than an interval threshold from a current time point. For example, the terminal automatically deletes a file the most recent sharing time point of which is more than 7 days ago.

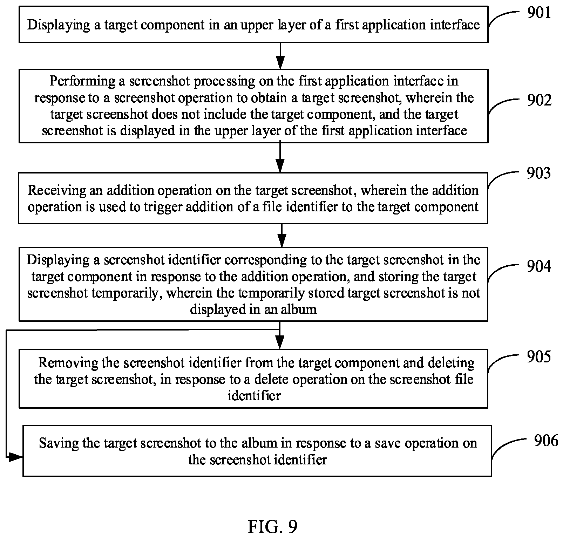

In addition to being able to share files in the application interface, the target component according to the embodiments of the present disclosure may also be used for screenshot sharing. FIG. 9 illustrates a method flowchart of a file sharing method according to yet another exemplary embodiment of the present disclosure. Referring to FIG. 9, the method may include actions at blocks 901 to 906.

At block 901, a target component is displayed in an upper layer of a first application interface.

At block 902, a screenshot processing is performed on the first application interface in response to a screenshot operation to obtain a target screenshot. The target screenshot does not include the target component, and the target screenshot is displayed in the upper layer of the first application interface.

In a possible scenario, when an interface screenshot of the first application interface needs to be shared as a to-be-shared file, a screenshot of the first application interface needs to be taken first and then added to the target component. In a case where the target component is displayed in the upper layer of the first application interface, to avoid the presence of the target component in the screenshot, the terminal takes a screenshot of the first application interface (which may be achieved by taking a screenshot of a layer where the first application interface is located) in response to receiving a screenshot operation and detecting the displaying of the target component, to obtain the target screenshot without the target component, and displays the target screenshot in the upper layer of the first application interface, such that the user can add the target screenshot to the target component.

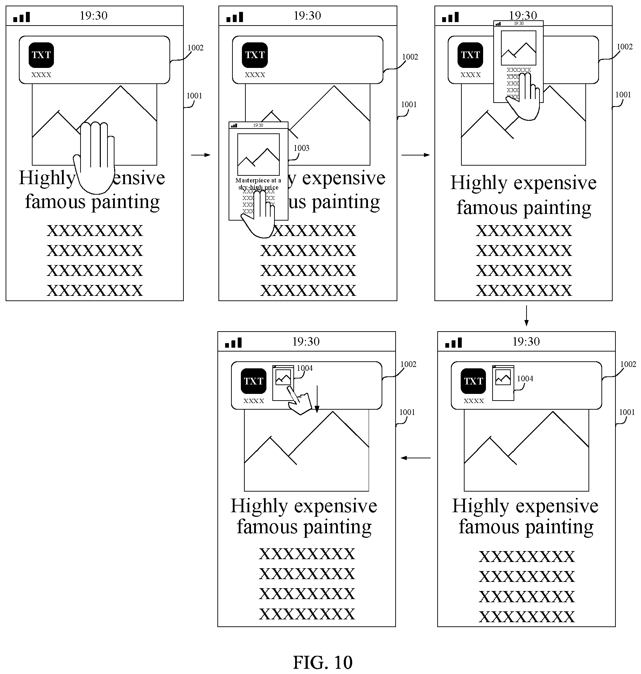

For example, as illustrated in FIG. 10, a file sharing floating window 1002 is displayed in an upper layer of a webpage browsing interface 1001. In response to receiving a three-finger swipe-down operation, the terminal takes a screenshot of the webpage browsing interface 1001 to obtain a target screenshot 1003 and displays the target screenshot 1003 in an upper layer of the webpage browsing interface 1001.

At block 903, an addition operation on the target screenshot is received. The addition operation is used to trigger addition of a file identifier to the target component.

Similar to a process of adding a file in the application interface to a file sharing interface in the above embodiments, when the target screenshot needs to be shared, the addition operation may be performed on the target screenshot to add the target screenshot to the target component.

For example, as illustrated in FIG. 10, in response to receiving a two-finger drag operation on the target screenshot 1003 and an endpoint of the two-finger drag operation being in the file sharing floating window 1002, the terminal determines that the addition operation on the target screenshot is received.

At block 904, in response to the addition operation, a screenshot identifier corresponding to the target screenshot is displayed in the target component, and the target screenshot is temporarily stored. The temporarily stored target screenshot is not displayed in an album.

In a possible implementation, the terminal displays the screenshot identifier corresponding to the target screenshot (e.g., a screenshot thumbnail) in the target component in response to the addition operation. However, the target screenshot is stored temporarily in the terminal, and the temporarily stored target screenshot is not displayed in the album.

Optionally, the user may share the target screenshot to different applications by performing a sharing operation on the screenshot identifier. For a screenshot sharing process, reference may be made to the above-mentioned embodiments, and description thereof will be omitted here.

At block 905, the screenshot identifier is removed from the target component and the target screenshot is deleted, in response to a delete operation on the screenshot file identifier.

In this embodiment of the present disclosure, deletion of the file identifier displayed in the target component is supported. In response to receiving the delete operation on the file identifier, the terminal removes the file identifier from the target component. When a file corresponding to the file identifier is a file in the application interface, the delete operation does not affect the file in the application interface. When the file corresponding to the file identifier is a screenshot, the terminal also deletes the target screenshot based on the delete operation since the target screenshot is in a temporarily stored state.

Here, the delete operation may be a swipe operation in a specified direction (such as a swipe-up operation), a click operation on a deletion control corresponding to the file identifier, or the like, which is not limited in this embodiment.

At block 906, the target screenshot is saved to the album in response to a save operation on the screenshot identifier.

For the target screenshot in the target component, in addition to being able to delete the target screenshot, the user may also save the target screenshot to the album by an operation, such that the target screenshot can be displayed in the album. In a possible implementation, the user can save the target screenshot by performing the save operation on the screenshot identifier. Optionally, the save operation and the delete operation may be mutually inverse operations. For example, when the delete operation is a swipe-up operation, the save operation may be a swipe-down operation on the screenshot identifier. For example, as illustrated in FIG. 10, when receiving a swipe-down operation on a screenshot identifier 1004, the terminal stores the target screenshot 1003 in the album.

It should be noted that after the target screenshot is saved to the album, when the delete operation on the screenshot identifier is received again, the terminal only deletes the screenshot identifier in the target component and does not delete the target screenshot.

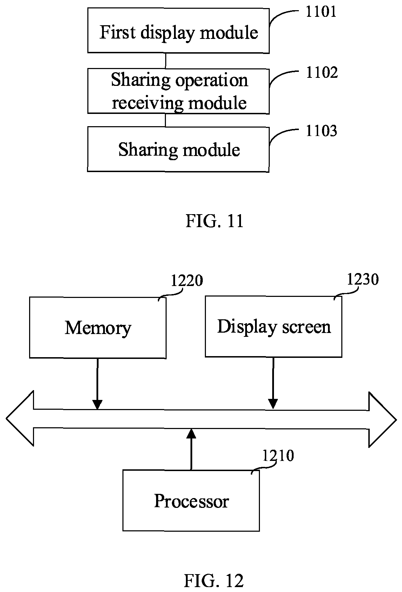

FIG. 11 illustrates a block diagram showing a structure of a file sharing apparatus according to an embodiment of the present disclosure. Referring to FIG. 11, the apparatus can be implemented as all or part of a terminal by means of software, hardware, or a combination thereof. The apparatus includes a first display module 1101, a sharing operation reception module 1102, and a sharing module 1103.

The first display module 1101 is configured to display a target component in an upper layer of a first application interface. The target component is used to display a file identifier of a to-be-shared file. Addition and deletion of the to-be-shared file in the target component are supported.

The sharing operation receiving module 1102 is configured to receive a sharing operation on a target file identifier in the target component. The target file identifier is a file identifier of a target file that is available from at least one second application interface. The sharing operation is used to trigger sharing of a selected file in a current application interface.

The sharing module 1103 is configured to share the target file in the first application interface in response to the sharing operation.

Optionally, the apparatus further includes a second display module configured to display the target component in an upper layer of the second application interface; an addition operation receiving module configured to receive an addition operation on the target file in the second application interface, wherein the addition operation is used to trigger addition of a file identifier to the target component; and an identifier display module configured to display the target file identifier in the target component in response to the addition operation,. The first display module 1101 is further configured to switch the second application interface to the first application interface in response to an interface switching operation, and display the target component in the upper layer of the first application interface.

Optionally, the second display module includes: a first display unit configured to display the second application interface; and display the target component in the upper layer of the second application interface in response to a component callout operation; or a second display unit configured to display the second application interface, and display the target component in the upper layer of the second application interface in response to a selection operation on a shareable file in the second application interface.

Optionally, the second display unit is further configured to: display the target component temporarily in the upper layer of the second application interface in response to the selection operation on the shareable file in the second application interface; and display the target component fixedly in response to an addition operation on the shareable file. The target component fixedly displayed includes a file identifier of the shareable file.

Optionally, the apparatus further includes a storage module configured to store a target sharing path of the target file. The sharing module 1103 is configured to transmit the target sharing path to an application to which the first application interface belongs in response to the sharing operation. The application to which the first application interface belongs is used for sharing the target file in the first application interface based on the target sharing path.

Optionally, the apparatus further includes a display stop module configured to stop displaying the target component in response to not receiving any sharing operation or addition operation for a predetermined time length; or a display stop module configured to stop displaying the target component in response to a component withdrawal operation on the target component.

Optionally, the sharing operation receiving module 1102 includes: an effective identifier display unit configured to display a sharing effective identifier in a region in the upper layer of the second application interface other than the target component in response to a drag operation on the target file identifier in the target component; and a sharing operation determining unit configured to determine, in response to a drag endpoint of the drag operation being in a display region corresponding to the sharing effective identifier, that the sharing operation performed on the target file identifier is received.

Optionally, the apparatus further includes: a screenshot module configured to perform a screenshot processing on the first application interface in response to a screenshot operation to obtain a target screenshot, wherein the target screenshot does not include the target component, and the target screenshot is displayed in the upper layer of the first application interface; a screenshot addition module configured to receive an addition operation on the target screenshot, wherein the addition operation is used to trigger addition of a file identifier to the target component; and a screenshot display module configured to display a screenshot identifier corresponding to the target screenshot in the target component in response to the addition operation, and store the target screenshot temporarily, wherein the temporarily stored target screenshot is not displayed in an album.

Optionally, the apparatus further includes: a deletion module configured to remove the screenshot identifier from the target component and delete the target screenshot in response to a delete operation on the screenshot file identifier; and a saving module configured to save the target screenshot to the album in response to a save operation on the screenshot identifier.

Optionally, the apparatus further includes an update module configured to update a display order of the file identifier in the target component. The display order is determined based on a number of times for which a file has been shared or a most recent sharing time point of the file.

In summary, in the embodiments of the present disclosure, through setting the target component and displaying the file identifier of the to-be-shared file in the target component, when the target file in the at least one second application interface needs to be shared in the first application interface, the target file can be shared by performing the sharing operation on the target file identifier in the target component that is in the upper layer of the first application interface. In addition, when a same file needs to be shared to different applications, a plurality of times of file sharing can be achieved by performing a plurality of times of sharing operations on the target file identifier in the target component, which is conducive to improving efficiency in sharing files compared with a manner in the related art of sharing files through the sharing pop-up window.

FIG. 12 illustrates a block diagram showing a structure of a terminal according to an exemplary embodiment of the present disclosure. Referring to FIG. 12, the terminal of the present disclosure may include one or more of the following components: a processor 1210 and a memory 1220.

The processor 1210 may include one or more processing cores. The processor 1210 connects, via various interfaces and lines, various parts within the entire terminal to perform various functions of the terminal and process data by running or executing instructions, programs, code sets, or instruction sets stored in the memory 1220, and by calling data stored in the memory 1220. Optionally, the processor 1210 may be implemented in at least one hardware form of a Digital Signal Processing (DSP), a Field-Programmable Gate Array (FPGA), or a Programmable Logic Array (PLA). The processor 1210 may integrate one or a combination of a Central Processing Unit (CPU), a Graphics Processing Unit (GPU), a Neural-network Processing Unit (NPU), or a modem. The CPU mainly handles the operating system, user interface, applications, etc. The GPU is responsible for rendering and drawing of contents to be displayed on a touch screen. The NPU is configured to implement an Artificial Intelligence (AI) function. The modem is configured to handle wireless communication. It should be understood that the above modem may be implemented by a single chip without being integrated into the processor 1210.

The memory 1220 may include a Random Access Memory (RAM) or a Read-Only Memory (ROM). Optionally, the memory 1220 includes a non-transitory computer-readable storage medium (NCSM). The memory 1220 may be configured to store instructions, programs, codes, code sets, or instruction sets. The memory 1220 may include a program storage region and a data storage region. The program storage region may store instructions for implementing an operating system, instructions for at least one function (e.g., a touch function, a sound playing function, a picture playing function, etc.), instructions for implementing any of the method embodiments described below, etc. The data storage region may store data created based on the use of the terminal (e.g., audio data or a phone book), etc.

The terminal according to the embodiments of the present disclosure further includes a display screen 1230. The display screen 1230 is configured to display pictures, and may be a full screen, a specially-shaped screen, a curved screen, a folding screen, or a double-sided screen, which is not limited in the embodiments of the present disclosure. In addition, the display screen 1230 may also have a touch function, such that the user can touch elements in an interface by means of a finger or a stylus.

In addition to this, those skilled in the art can understand that the structure of the terminal illustrated in the above figure does not constitute a limitation of the terminal. The terminal may include more or fewer components than those illustrated in the figures, or combine certain components, or have a different arrangement of components. For example, the terminal also includes components such as a radio-frequency circuit, an input unit, a sensor, an audio circuit, a speaker, a microphone, a power supply, etc., which will not be described in detail here.

Embodiments of the present disclosure further provide a computer-readable storage medium. The storage medium has at least one instruction stored thereon. The at least one instruction is configured to be executed by a processor to implement the file sharing method according to any of the above embodiments.

Embodiments of the present disclosure provide a computer program product or a computer program. The computer program product or the computer program includes computer instructions stored in the computer-readable storage medium. A processor of a computer device reads the computer instructions from the computer-readable storage medium. The processor executes the computer instructions to cause the computer device to perform the file sharing method according to any of the above embodiments.

It is conceivable for those skilled in the art that in one or more of the above examples, functions described in the embodiments of the present disclosure may be implemented using hardware, software, firmware, or any combination thereof. When implemented using software, these functions may be stored in a computer-readable medium or transmitted as one or more instructions or codes on a computer-readable medium. The computer-readable medium includes a computer storage medium and a communication medium. The communication medium includes any medium that facilitates transmission of a computer program from one position to another. The storage medium may be any available medium that is accessible to a general purpose or specialized computer.

While the optional embodiments of the present disclosure have been described above, the present disclosure is not limited to these embodiments. Any modification, equivalent substitution, improvement, etc., made within the ideas and principles of the present disclosure shall fall within the protection scope of the present disclosure.

## Claims

1. A file sharing method, comprising:
displaying a target component in an upper layer of a first application interface, wherein the target component is used to display a file identifier of a to-be-shared file, and wherein addition and deletion of the to-be-shared file in the target component are supported;
receiving a sharing operation on a target file identifier in the target component, wherein a target file corresponding to the target file identifier is available from at least one second application interface, and wherein the sharing operation is used to trigger sharing of a selected file in a current application interface; and
sharing the target file in the first application interface in response to the sharing operation.

2. The method according to claim 1, further comprising, prior to said displaying the target component in the upper layer of the first application interface:
displaying the target component in an upper layer of the second application interface;
receiving an addition operation on the target file in the second application interface, wherein the addition operation is used to trigger addition of a file identifier to the target component; and
displaying the target file identifier in the target component in response to the addition operation,
wherein said displaying the target component in the upper layer of the first application interface comprises:
switching the second application interface to the first application interface in response to an interface switching operation, and displaying the target component in the upper layer of the first application interface.

3. The method according to claim 2, wherein said displaying the target component in the upper layer of the second application interface comprises:
displaying the second application interface, and displaying the target component in the upper layer of the second application interface in response to a component callout operation; or
displaying the second application interface, and displaying the target component in the upper layer of the second application interface in response to a selection operation on a shareable file in the second application interface.

4. The method according to claim 3, wherein said displaying the target component in the upper layer of the second application interface in response to the selection operation on the shareable file in the second application interface comprises:
displaying the target component temporarily in the upper layer of the second application interface in response to the selection operation on the shareable file in the second application interface; and
displaying the target component fixedly in response to an addition operation on the shareable file, wherein the target component fixedly displayed comprises a file identifier of the shareable file.

5. The method according to any one of claims 2 to 4, further comprising, subsequent to said receiving the addition operation on the target file in the second application interface:
storing a target sharing path of the target file,
wherein said sharing the target file in the first application interface in response to the sharing operation comprises:
transmitting, in response to the sharing operation, the target sharing path to an application to which the first application interface belongs, the application to which the first application interface belongs being used for sharing the target file in the first application interface based on the target sharing path.

6. The method according to any one of claims 2 to 4, further comprising:
stopping displaying the target component in response to not receiving any sharing operation or addition operation for a predetermined time length; or
stopping displaying the target component in response to a component withdrawal operation on the target component.

7. The method according to any one of claims 1 to 4, wherein said receiving the sharing operation on the target file identifier in the target component comprises:
displaying a sharing effective identifier in a region in the upper layer of the second application interface other than the target component in response to a drag operation on the target file identifier in the target component; and
determining, in response to a drag endpoint of the drag operation being in a display region corresponding to the sharing effective identifier, that the sharing operation on the target file identifier is received.

8. The method according to any one of claims 1 to 4, further comprising, subsequent to said displaying the target component in the upper layer of the first application interface:
performing a screenshot processing on the first application interface in response to a screenshot operation to obtain a target screenshot, wherein the target screenshot does not comprise the target component, and the target screenshot is displayed in the upper layer of the first application interface;
receiving an addition operation on the target screenshot, wherein the addition operation is used to trigger addition of a file identifier to the target component; and
displaying a screenshot identifier corresponding to the target screenshot in the target component in response to the addition operation, and storing the target screenshot temporarily, wherein the temporarily stored target screenshot is not displayed in an album.

9. The method according to claim 8, further comprising, subsequent to said displaying the screenshot identifier corresponding to the target screenshot in the target component:
removing the screenshot identifier from the target component and deleting the target screenshot, in response to a delete operation on the screenshot file identifier; and
saving the target screenshot to the album in response to a save operation on the screenshot identifier.

10. The method according to any one of claims 1 to 4, further comprising, subsequent to said sharing the target file in the first application interface in response to the sharing operation:
updating a display order of the file identifier in the target component, wherein the display order is determined based on a number of times for which a file has been shared or a most recent sharing time point of the file.

11. A file sharing apparatus, comprising:
a first display module configured to display a target component in an upper layer of a first application interface, wherein the target component is used to display a file identifier of a to-be-shared file, and wherein addition and deletion of the to-be-shared file in the target component are supported;
a sharing operation receiving module configured to receive a sharing operation on a target file identifier in the target component, wherein a target file corresponding to the target file identifier is available from at least one second application interface, and wherein the sharing operation is used to trigger sharing of a selected file in a current application interface; and
a sharing module configured to share the target file in the first application interface in response to the sharing operation.

12. The apparatus according to claim 11, further comprising:
a second display module configured to display the target component in an upper layer of the second application interface;
an addition operation receiving module configured to receive an addition operation on the target file in the second application interface, wherein the addition operation is used to trigger addition of a file identifier to the target component; and
an identifier display module configured to display the target file identifier in the target component in response to the addition operation,
wherein the first display module is further configured to switch the second application interface to the first application interface in response to an interface switching operation, and display the target component in the upper layer of the first application interface.

13. The apparatus according to claim 12, wherein the second display module comprises:
a first display unit configured to display the second application interface; and display the target component in the upper layer of the second application interface in response to a component callout operation; or
a second display unit configured to display the second application interface, and display the target component in the upper layer of the second application interface in response to a selection operation on a shareable file in the second application interface.

14. The apparatus according to claim 13, wherein the second display unit is further configured to:
display the target component temporarily in the upper layer of the second application interface in response to the selection operation on the shareable file in the second application interface; and
display the target component fixedly in response to an addition operation on the shareable file, wherein the target component fixedly displayed comprises a file identifier of the shareable file.

15. The apparatus according to any one of claims 12 to 14, further comprising:
a storage module configured to store a target sharing path of the target file,
wherein the sharing module is further configured to transmit, in response to the sharing operation, the target sharing path to an application to which the first application interface belongs, the application to which the first application interface belongs being used for sharing the target file in the first application interface based on the target sharing path.

16. The apparatus according to any one of claims 12 to 14, further comprising a display stop module configured to:
stop displaying the target component in response to not receiving any sharing operation or addition operation for a predetermined time length; or
stop displaying the target component in response to a component withdrawal operation on the target component.

17. The apparatus according to any one of claims 11 to 14, wherein the sharing operation receiving module comprises:
an effective identifier display unit configured to display a sharing effective identifier in a region in the upper layer of the first application interface other than the target component in response to a drag operation on the target file identifier in the target component; and
a sharing operation determining unit configured to determine, in response to a drag endpoint of the drag operation being in a display region corresponding to the sharing effective identifier, that the sharing operation on the target file identifier is received.

18. The apparatus according to any one of claims 11 to 14, further comprising:
a screenshot module configured to perform a screenshot processing on the first application interface in response to a screenshot operation to obtain a target screenshot, wherein the target screenshot does not comprise the target component, and the target screenshot is displayed in the upper layer of the first application interface;
a screenshot addition module configured to receive an addition operation on the target screenshot, wherein the addition operation is used to trigger addition of a file identifier to the target component; and
a screenshot display module configured to display a screenshot identifier corresponding to the target screenshot in the target component in response to the addition operation, and store the target screenshot temporarily, wherein the temporarily stored target screenshot is not displayed in an album.

19. The apparatus according to claim 18, further comprising:
a deletion module configured to remove the screenshot identifier from the target component and delete the target screenshot in response to a delete operation on a screenshot file identifier; and
a saving module configured to save the target screenshot to the album in response to a save operation on the screenshot identifier.

20. The apparatus according to any one of claims 11 to 14, further comprising:
an update module configured to update a display order of a file identifier in the target component, wherein the display order is determined based on a number of times for which a file has been shared or a most recent sharing time point of the file.

21. A terminal, comprising:
a processor; and
a memory having at least one instruction stored thereon, wherein the at least one instruction is configured to be executed by the processor to implement the file sharing method according to any of claims 1 to 10.

22. A computer-readable storage medium, having at least one instruction stored thereon, wherein the at least one instruction is configured to be executed by a processor to implement the file sharing method according to any of claims 1 to 10.
